# EUROPÄISCHE PATENTSCHRIFT

(11) **EP 2 638 988 B1**
(45) Veröffentlichungstag und Bekanntmachung des Hinweises auf die Patenterteilung: **24.07.2019**
(21) Anmeldenummer: 13154009.8
(22) Anmeldetag: 05.02.2013
(51) Int. Cl.: B21J 15/02, B21J 15/14, F16B 5/04, F16B 19/06, F16B 19/08, B21J 15/32

(54) **System aufweisend einen Stanzniet und Fügepartnern, sowie Verfahren zum Fügen der Fügepartnern durch den Stanzniet**
System comprising a self-piercing rivet and workpieces, and method for joining said workpieces using said rivet
Système comprenant un rivet auto-poinçonneur et des pièces à assembler, et procédé d'assemblage desdites pièces avec ledit rivet

(30) Priorität: 16.03.2012 DE 102012204131
(43) Veröffentlichungstag der Anmeldung: 18.09.2013
(73) Patentinhaber: Bayerische Motoren Werke Aktiengesellschaft, 80809 München (DE)
(72) Erfinder: Querengässer, Michael, 94431 Pilsting (DE); Gschneidinger, Rainer, 94563 Otzing (DE); Berndt, Gerhard, 94348 Atting (DE); Wilhelm, Maximilian, 84453 Mühldorf (DE)

(56) Entgegenhaltungen:
- AU-A- 1 220 770
- DE-A1-102005 031 916
- DE-A1-102006 021 843
- DE-A1-102008 005 288
- DE-A1-102009 048 398
- GB-A- 498 059
- JP-A- 2003 254 309
- JP-A- 2004 076 854
- US-A- 5 015 136
- US-A1- 2004 016 111

## Beschreibung

Die vorliegende Erfindung betrifft ein System, aufweisend einen Stanzniet, einen oberen Fügepartner und einen unteren Fügepartner sowie ein Verfahren zum Fügen von einem oberen Fügepartner und einem unteren Fügepartner durch einen Stanzniet.

### STAND DER TECHNIK

Verbindungen zwischen zwei Fügepartnern werden, insbesondere im Fahrzeugbau, oftmals mittels Stanznieten hergestellt. Die Stanznieten können dabei insbesondere als Vollstanznieten oder als Halbhohlstanznieten ausgestaltet sein. Ein Vollstanzniet durchstanzt dabei vollständig die zu fügenden Materialien. Die beiden Fügepartner können mittels eines Niederhalters und einer Matrize gegeneinander gedrückt werden. An der Matrize ist oftmals ein Dom ausgebildet, der in das Material des unteren Fügepartners geprägt wird. Der Vollstanzniet kann eine oder mehrere Aufnahmen, wie beispielsweise Nuten, Rillen oder Kerben, aufweisen. Durch den Dom der Matrize wird das Material des unteren Fügepartners zum Fließen gebracht und in die Kerben des Vollstanzniets gedrückt. So wird ein Hinterschnitt erzeugt, der das Lösen der Fügeverbindung verhindert. Ein Halbhohlstanzniet durchstanzt dagegen nur den oberen Fügepartner vollständig und dringt in den unteren Fügepartner lediglich ein. Die Matrize ist in diesem Fall derart ausgestaltet, dass der Halbhohlstanzniet im Inneren des unteren Fügepartners verformt wird. Das Material des unteren Fügepartners wird dabei ebenfalls verformt und bildet mit dem verformten Halbhohltanzniet ebenfalls einen Formschluss, der das Lösen der Fügeverbindung verhindert.

In beiden Fällen wird somit das Material des oberen Fügepartners durch den Stanzniet durchstanzt. Nachteilig dabei ist, dass es, insbesondere bei oberen Fügepartnern die aus einem spröden Material aufgebaut sind, zu einer Schädigung des oberen Fügepartners aufgrund des Stanzvorganges kommen kann. So kann der obere Fügepartner beispielsweise nach dem Stanzvorgang vom Stanzloch ausgehende Risse aufweisen oder während des Stanzvorganges sogar brechen. Ferner liegen nach einem wie oben beschriebenen Stanzvorgang beide Fügepartner formschlüssig am Stanzniet an. Der obere und der untere Fügepartner können jedoch unterschiedliche Materialien aufweisen, die insbesondere je einen unterschiedlichen Wärmeausdehnungskoeffizienten aufweisen. Bei einem dem Stanzvorgang nachgelagerten Wärmeprozess kann es dadurch zu Verbindungs- und/oder Materialschädigungen kommen, da sich die beiden Fügepartner unterschiedlich ausdehnen und/oder zusammenziehen.

Es sind gattungsgemäße Stanznieten aus den Druckschriften DE 10 2005 031 916 A1, US 2004/016111 A1, GB 498 059 A und JP 2004 076854 A bekannt.

### OFFENBARUNG DER ERFINDUNG

Es ist daher Aufgabe der Erfindung, die voranstehend beschriebenen Nachteile bekannter Fügeverfahren zumindest teilweise zu beheben. Insbesondere ist es Aufgabe der vorliegenden Erfindung, einen Stanzniet zum Fügen von einem oberen Fügepartner und einem unteren Fügepartner sowie ein Verfahren zum Fügen von einem oberen Fügepartner und einem unteren Fügepartner bereitzustellen, welche in einfacher und kostengünstiger Weise das Fügen von Fügepartnern verbessern, insbesondere die Verwendung von spröden Materialien als oberen Fügepartner und/oder die Verwendung von thermoplastischen Fügepartnern und/oder von Fügepartnern mit unterschiedlichen Wärmeausdehnungskoeffizienten ermöglichen.

Die voranstehende Aufgabe wird gelöst durch den unabhängigen Anspruch 1 sowie durch ein Verfahren mit den Merkmalen des unabhängigen Anspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen System beschrieben sind, selbstverständlich auch in Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

In einem ersten Aspekt der Erfindung wird die Aufgabe durch ein System, aufweisend einen Stanzniet, einen oberen Fügepartner und einen unteren Fügepartner, der Stanzniet aufweisend einen Kopf und einen Schaft, gelöst. Insbesondere ist der Stanzniet dadurch gekennzeichnet, dass der Stanzniet einen oberen und einen unteren Schaftabschnitt mit unterschiedlichen Querschnitten aufweist, wobei der am Kopf des Stanzniets ausgebildete obere Schaftabschnitt den größeren Querschnitt und eine derartige Länge aufweist, dass nach einem Stanzen des Schaftes des Stanzniets beim Fügen der Fügepartner nur der untere Schaftabschnitt in oder durch den unteren Fügepartner gestanzt ist und der Kopf des Stanzniets formschlüssig an der dem unteren Fügepartner abgewandten Seite des oberen Fügepartners anliegt. Auf diese Weise wird der Stanzniet bündig in die zu fügenden Fügepartner eingedrückt, wobei nur der untere Schaftabschnitt in oder durch den unteren Fügepartner gestanzt wird. Zusammen mit dem Anliegen des Kopfes auf der dem unteren Fügepartner abgewandten Seite des oberen Fügepartners, also der obersten Oberfläche des Stapels aus Fügepartnern, bildet dies die formschlüssige Fügeverbindung. Ein Stanzen des oberen Schaftabschnitts durch den oberen Fügepartner ist nicht zwingend notwendig. Dadurch wird das Fügen von Fügepartnern vereinfacht und somit verbessert. Ferner kann beispielsweise im oberen Fügepartner ein Vorloch vorgesehen sein, in das der Stanzniet eingeführt wird. Der Kopf des Stanzniets kann in einem solchen Fall vorteilhafterweise derart ausgestaltet sein, dass er das Vorloch vollständig abdeckt. Eine Beschädigung des oberen Fügepartners, wie sie bei einem Stanzen von Fügepartnern aus spröden Materialien oftmals vorkommt, kann so vermieden werden. Auch verschiedene Wärmeausdehnungskoeffizienten der Fügepartner können durch ein derartiges Vorloch ausgeglichen werden. Ein erfindungsgemäßer Stanzniet erweitert somit den Anwendungsbereich von Stanznieten um die Verwendung von oberen Fügepartnern aus spröden Materialien und oberer und unterer Fügepartner mit unterschiedlichen Wärmeausdehnungskoeffizienten. Insbesondere können mit einem erfindungsgemäßen Stanzniet beispielsweise ein oberer Fügepartner aus einem faserverstärkten Kunststoff und ein unterer Fügepartner aus einem metallischen Werkstoff miteinander über eine Fügeverbindung verbunden werden. Ferner ist bei einem Stanzniet des erfindungsgemäßen Systems vorgesehen, dass die Länge des oberen Schaftabschnitts der Dicke des oberen Fügepartners entspricht. Dadurch liegt nach dem Stanzen automatisch der Kopf des Stanzniets an der dem unteren Fügepartner abgewandten Seite des oberen Fügepartners an und nur der untere Schaftabschnitt ist in oder durch den unteren Fügepartner gestanzt. Vorteilhafterweise kann bei einem erfindungsgemäßen Stanzniet des Systems vorgesehen sein, dass der Querschnitt des oberen Schaftabschnitts und der Querschnitt des unteren Schaftabschnitts die gleiche geometrische Form aufweisen und/oder zentriert zueinander angeordnet sind. Ein derartig ausgebildeter Stanzniet ist einfach herzustellen. Als geometrische Form ist dabei beispielsweise ein Kreis besonders bevorzugt, da diese Form nochmals besonders einfach in der Herstellung ist. Selbstverständlich sind auch andere Formen, wie zum Beispiel insbesondere regelmäßige Vielecke als Form denkbar. Durch eine zueinander zentrierte Anordnung kann das Stanzen des Stanzniets durch die Fügepartner vereinfacht werden, da ein Verkippen des Stanzniets während des Stanzvorgangs durch diese zentrierte Anordnung der Schaftabschnitte zueinander weniger wahrscheinlich auftritt als bei einer unzentrierten Anordnung der Schaftabschnitte zueinander.

Auch kann bei einem erfindungsgemäßen Stanzniet des Systems vorgesehen sein, dass nach einem Stanzen des Schaftes des Stanzniets beim Fügen der Fügepartner der obere Schaftabschnitt des Stanzniets an der dem oberen Fügepartner zugewandten Oberfläche des unteren Fügepartners formschlüssig anschlägt. Durch die Länge des oberen Schaftabschnitts des Stanzniets, die der Dicke des oberen Fügepartners angepasst ist, ist der obere Schaftabschnitt nach dem Stanzen vollständig in den oberen Fügepartner eingeführt. Dies kann insbesondere durch ein im oberen Fügepartner vorhandenes Vorloch realisiert sein. Der obere Schaftabschnitt wird somit nicht durch den unteren Fügepartner gestanzt. Dadurch, dass der Querschnitt des unteren Schaftabschnitts kleiner ist als der Querschnitt des oberen Schaftabschnitts, ergibt sich beim Übergang vom oberen Schaftabschnitt zum unteren Schaftabschnitt eine Stufe. Diese Stufe schlägt an der dem oberen Fügepartner zugewandten Oberfläche des unteren Fügepartners formschlüssig an oder liegt zumindest an dieser auf. Bei einer nachgeschalteten Verformung des unteren Fügepartners zur Bildung eines Formschlusses mit dem Stanzniet kann sich so der untere Fügepartner am oberen Schaftabschnitt abstützen. Ein ungewolltes Verformen des unteren Fügepartners, insbesondere in ein eventuelles Vorloch im oberen Fügepartner, kann so vermieden werden. Darüber hinaus wird durch das Abstützen des unteren Fügepartners am oberen Schaftabschnitt bei Vorhandensein von Aufnahmen, wie beispielsweise Nuten, Rillen oder Kerben, im unteren Schaftabschnitt ein Hinterfließen dieser Aufnahmen mit Material des unteren Fügepartners ermöglicht beziehungsweise zumindest unterstützt.

In einer Weiterentwicklung eines erfindungsgemäßen Stanzniets des Systems kann vorgesehen sein, dass der obere Schaftabschnitt umlaufend, insbesondere gleichmäßig umlaufend, am unteren Fügepartner anschlägt. Dadurch ergibt sich ein besonders gutes Anliegen des unteren Fügepartners am Stanzniet. Bei einem vorgenommenen Verformen des unteren Fügepartners und/oder des Stanzniets zur Bildung eines Formschlusses im Rahmen der Fügeverbindung kann sich somit der untere Fügepartner besonders gleichmäßig am oberen Schaftabschnitt abstützen. Dadurch ergibt sich eine besonders gleichmäßige und damit sichere axiale Fixierung des Stanzniets in Bezug auf den unteren Fügepartner, wodurch die Stabilität der Fügeverbindung nochmals gesteigert werden kann.

In einer weiteren Weiterentwicklung eines erfindungsgemäßen Stanzniets des Systems kann vorgesehen sein, dass der obere Schaftabschnitt im Bereich des Übergangs zum unteren Schaftabschnitt eine Abschrägung, insbesondere eine konisch umlaufende Verjüngung, aufweist. Die Länge des oberen Schaftabschnitts kann an die Dicke des oberen Fügepartners angepasst sein. Bei der Fertigung sowohl des Stanzniets als auch des oberen Fügepartners können jedoch leichte Abweichungen dieser Größen auftreten. Um diese sogenannten Fertigungstoleranzen auszugleichen, kann der obere Schaftabschnitt im Bereich des Übergangs zum unteren Schaftabschnitt eine Abschrägung aufweisen. Dadurch können diese Fertigungstoleranzen ausgeglichen werden, da durch die Abschrägung für viele verschiedene Kombinationen aus Länge des oberen Schaftabschnitts und Dicke des oberen Fügepartners eine Abstützung des unteren Fügepartners am oberen Schaftabschnitt möglich ist. Eine Ausbildung der Abschrägung als konisch umlaufende Verjüngung hat den zusätzlichen Vorteil, dass keine radiale Richtung in Bezug auf den Stanzniet bevorzugt wird. So kann ein besonders guter Ausgleich von Fertigungstoleranzen erreicht werden. Alternativ ist im Bereich des Übergangs zwischen dem oberen Schaftabschnitt und dem unteren Schaftabschnitt auch eine rechtwinklige Abstufung denkbar. Auch speziell für die Verdrängung von Klebemittel, das für ein Verkleben des oberen Fügepartners mit dem unteren Fügepartner verwendet wird, optimierte Formen des Übergangs sind selbstverständlich möglich.

Darüber hinaus kann bei einem erfindungsgemäßen Stanzniet des Systems vorgesehen sein, dass als Stanzniet ein Vollstanzniet oder ein Halbhohlstanzniet verwendet wird. Der erfindungsgemäße Stanzniet ist auf keine besondere Stanznietform eingeschränkt. Vollstanznieten sind besonders stabil und können auch dicke Lagen von Fügepartnern durchstanzen. Halbhohlstanznieten weisen in ihrem Inneren einen zentralen Hohlraum auf, in den sie einen Stanzrest eines Fügepartners aufnehmen können. Durch die Verwendung von verschiedenen Formen von Stanznieten ist eine breite Einsetzbarkeit des erfindungsgemäßen Stanzniets gegeben.

Ferner kann bei einem erfindungsgemäßen Stanzniet des Systems vorgesehen sein, dass der Stanzniet zumindest teilweise mit einer Beschichtung versehen ist. Dadurch ist es möglich, im Bereich der Beschichtung den Stanzniet von dem anliegenden Fügepartner galvanisch zu trennen. Insbesondere in Verbindung mit einem Verkleben der Fügepartner oder dem Anlegen eines mittleren, elektrisch nicht leitenden, Fügepartners kann so auch eine galvanische Trennung der Fügepartner erreicht werden. Ein vorhandenes Vorloch kann bei einem derartigen Verkleben auch mit Klebstoff verfüllt werden, um die galvanische Trennung noch weiter zu verbessern. Darüber hinaus können auch Kriechströme, insbesondere zwischen den Fügepartnern vermieden oder zumindest vermindert werden.

Auch kann bei einem erfindungsgemäßen Stanzniet des Systems vorgesehen sein, dass der Kopf des Stanzniets einen, insbesondere umlaufenden, Vorsprung aufweist, der nach einem Fügevorgang in die dem unteren Fügepartner abgewandten Seite des oberen Fügepartners eingedrückt ist. Dadurch kann eine zusätzliche radiale Fixierung des Stanzniets erreicht werden. Insbesondere bei einem vorhandenen Vorloch im oberen Fügepartner kann durch einen derartigen, vorteilhafterweise umlaufenden, Vorsprung eine Abdichtung des Vorlochs sichergestellt werden.

Gemäß einem zweiten Aspekt wird die Aufgabe durch ein Verfahren zum Fügen von einem oberen Fügepartner und einem unteren Fügepartner, wobei die Fügepartner des Systems gemäß dem ersten Aspekt durch einen Stanzniet des Systems gemäß dem ersten Aspekt, der Stanzniet aufweisend einen Kopf und einen Schaft, verbunden werden, gelöst. Das erfindungsgemäße Verfahren kann dabei insbesondere im Fahrzeugbau eingesetzt werden. Insbesondere ist das Verfahren dabei durch folgende Verfahrensschritte gekennzeichnet:
a) Einbringen eines Vorloches in den oberen Fügepartner, wobei der Querschnitt des Vorloches größer ist als der Querschnitt des Schaftes des Stanzniets,
b) Anlegen der Fügepartner aneinander,
c) Einführen des Schaftes des Stanzniets in das Vorloch,
d) Stanzen des Schaftes des Stanzniets durch den unteren Fügepartner durch einen ersten Stempel, wobei der Stanzniet durch den unteren Fügepartner gedrückt wird bis der Kopf des Stanzniets formschlüssig an der dem unteren Fügepartner abgewandten Seite des oberen Fügepartners anliegt, wobei der Kopf des Stanzniets das Vorloch abdeckt.

In einem ersten Verfahrensschritt wird ein Vorloch in den oberen Fügepartner eingebracht. Das Vorloch ist dabei derart dimensioniert, dass der Querschnitt des Vorloches größer ist als der Querschnitt des Schaftes des Stanzniets. Der Stanzniet kann somit in das Vorloch eingebracht werden, ohne den oberen Fügepartner zu berühren. Die Form des Querschnitts des Vorloches kann beliebig gewählt sein, vorzugsweise ist jedoch die Form des Querschnitts des Vorloches an die Form des Querschnitts des Schaftes des Stanzniets angepasst. Besonders bevorzugt ist hierbei ein kreisförmiger Querschnitt sowohl des Vorloches als auch des Schaftes des Stanzniets.

In Schritt b) des erfindungsgemäßen Verfahrens werden die Fügepartner aneinandergelegt. Das Aneinanderlegen wird dabei derart durchgeführt, dass der obere und der untere Fügepartner zumindest in einem Bereich überlappen, wobei sich in dem Bereich auch das in dem oberen Fügepartner eingebrachte Vorloch befindet. Insbesondere werden die beiden Fügepartner ferner auf eine Weise aneinandergelegt, dass sie zueinander eine feste Position einnehmen können, insbesondere dass sie zueinander raumfest angeordnet sind. Dies kann beispielsweise durch externe Vorrichtungen durchgeführt und/oder unterstützt werden, die an dem oberen Fügepartner und dem unteren Fügepartner angeordnet sind.

Im anschließenden Schritt c) des erfindungsgemäßen Verfahrens wird der Schaft des Stanzniets in das Vorloch eingeführt. Nach dem Einführen liegt das untere Ende des Schaftes des Stanzniets, das heißt das dem Kopf des Stanzniets gegenüberliegende Ende des Stanzniets, an der dem oberen Fügepartner zugewandten Oberfläche des unteren Fügepartners an. Durch die bereits in Bezug auf Schritt a) des erfindungsgemäßen Verfahrens beschriebenen Formen der Querschnitte des Vorloches und des Schaftes des Stanzniets kann im Vorloch eine Berührung des oberen Fügepartners durch den Schaft des Stanzniets vermieden werden.

Im vierten Verfahrensschritt d) des erfindungsgemäßen Verfahrens wird der Schaft des Stanzniets durch einen ersten Stempel durch den unteren Fügepartner gestanzt. Dies ist im Sinne der Erfindung ein Setzen des Stanzniets, wobei der untere Fügepartner gestanzt wird. Der Stanzniet wird dabei durch den unteren Fügepartner gedrückt bis der Kopf des Stanzniets formschlüssig an der dem unteren Fügepartner abgewandten Seite des oberen Fügepartners anliegt. Der Kopf des Stanzniets deckt dabei das Vorloch ab. Insbesondere deckt der Kopf des Stanzniets das Vorloch dabei vollständig ab, wodurch das Vorloch von außen nicht mehr zugänglich ist. Auch ein leichtes Eindrücken des Kopfes des Stanzniets in den oberen Fügepartner um das Vorloch zur Bildung eines Formschlusses zur axialen Fixierung des Stanzniets in Bezug auf den oberen Fügepartner, ist möglich. Insbesondere wird der Stanzniet nur durch den unteren Fügepartner gestanzt. Eine Verwendung von spröden Materialien für den oberen Fügepartner, die durch ein Stanzen beschädigt werden könnten, wird dadurch möglich. Bei einer nachgelagerten Wärmebehandlung der beiden Fügepartner, wie sie zum Beispiel zum Trocknen einer Lackierung vorgesehen sein kann, können Fügepartner, die unterschiedliche Wärmeausdehnungskoeffizienten aufweisen, sich auch unterschiedlich ausdehnen beziehungsweise zusammenziehen. Durch das Vorsehen eines Vorloches im oberen Fügepartner können diese unterschiedlichen Wärmeausdehnungsverhaltensweisen der beiden Fügepartner kompensiert werden. Eine Beschädigung der Fügeverbindung und/oder der Materialien der Fügepartner durch einen derartigen nachgelagerten Wärmeprozess kann somit vermieden oder zumindest verringert werden.

Ferner kann bei einem erfindungsgemäßen Verfahren vorgesehen sein, dass Schritt b) vor Schritt a) ausgeführt wird. Dadurch kann der Fügeprozess auf verschiedene Anforderungen eingestellt werden. So kann es in der Herstellung einfacher sein, das Vorloch vor dem Anlegen der beiden Fügepartner im oberen Fügepartner einzubringen. Bei einem Einbringen des Vorloches in den oberen Fügepartner nach dem Anlegen der beiden Fügepartner aneinander kann es von Vorteil sein, dass das Vorloch genau an dem Ort eingebracht werden kann, an dem die Fügeverbindung vorgesehen ist. Dadurch kann beispielsweise eine größere örtliche Präzision der Fügeverbindung erreicht werden.

Darüber hinaus kann bei einem erfindungsgemäßen Verfahren vorgesehen sein, dass nach Schritt d) ein Verformen des Schaftes des Stanzniets und/oder des unteren Fügepartners durch eine erste Matrize zur Ausbildung einer axialen Fixierung des Schaftes des Stanzniets im und/oder am unteren Fügepartner. Insbesondere kann dabei ein aus dem unteren Fügepartner hervorstehendes Ende des Schaftes des Stanzniets zu einem zweiten Kopf verformt werden. Die erste Matrize kann dabei auch als zweiter Stempel ausgebildet sein. Dadurch wird eine axiale Fixierung des Schaftes des Stanzniets im und/oder am unteren Fügepartner ausgebildet. Zusammen mit dem formschlüssigen Anliegen des Kopfes des Stanzniets am oberen Fügepartner bildet dieser Formschluss des Stanzniets mit dem unteren Fügepartner eine axiale Halterung des Stanzniets in den Fügepartnern und damit eine sichere Fügeverbindung der beiden Fügepartner. Die Fügeverbindung kann ohne Einwirkung von außen nicht mehr gelöst werden.

Ferner kann bei einem erfindungsgemäßen Verfahren vorgesehen sein, dass Zentriermittel vorgesehen sind, die zum Zentrieren des Schaftes des Stanzniets in dem Vorloch ausgebildet sind. Ein Zentriermittel kann dabei insbesondere eine Vertiefung im unteren Fügepartner sein, die insbesondere zentriert zum Vorloch angeordnet sein kann. Das Ende des Schaftes des Stanzniets kann in diese Vertiefung eingreifen und wird durch diese Vertiefung in axialer Richtung fixiert. Durch eine in Bezug auf das Vorloch zentrierte Vertiefung wird somit auch ein in diese Vertiefung eingreifender Stanzniet in Bezug auf das Vorloch zentriert. Eine weitere Möglichkeit eines Zentriermittels stellt ferner beispielsweise eine Spitze, insbesondere eine konische Spitze am Ende des Schaftes des Stanzniets dar. Dabei wird vorzugsweise der Stanzniet zentriert in Bezug auf das Vorloch angeordnet und mit leichtem Druck die Spitze in das Material des unteren Fügepartners gedrückt. Auf diese Weise wird der Stanzniet axial im Vorloch fixiert. Ein nachträgliches Verrutschen aus dieser zentrierten Position kann somit vermieden werden.

Ferner kann bei einem erfindungsgemäßen Verfahren vorgesehen sein, dass während des Stanzens die Fügepartner durch einen Niederhalter am oberen Fügepartner und durch eine zweite Matrize am unteren Fügepartner gegeneinander gedrückt werden. Die Verwendung von externen Vorrichtungen zum Anlegen beziehungsweise Aneinanderdrücken der Fügepartner, wie es ein Niederhalter und/oder eine zweite Matrize darstellen, stellen eine Möglichkeit zu einer besonders sicheren Fixierung der Fügepartner dar. Insbesondere kann der Niederhalter am oberen Fügepartner derart ausgestaltet sein, dass in ihm der Stanzniet zugeführt werden kann. Die zweite Matrize am unteren Fügepartner kann vorteilhafterweise eine zentrale Bohrung zur Aufnahme des ausgestanzten Rests des unteren Fügepartners aufweisen. Insbesondere werden zusätzlich durch diese zentrale Bohrung die Ränder des Stanzlochs im unteren Fügepartner definiert. Ein Ausreißen dieser Ränder durch Aufbiegung kann so vermieden oder zumindest stark unterdrückt werden.

Ferner kann bei einem erfindungsgemäßen Verfahren vorgesehen sein, dass in Schritt a) das Vorloch durch eine spanende Bearbeitung, insbesondere durch Bohren oder Fräsen, durch ein Schneid-, Schweiß- oder Stanzverfahren oder bei der Herstellung des oberen Fügepartners erzeugt wird. Eine spanende Bearbeitung stellt dabei eine besonders präzise Methode zum Einbringen des Vorloches in den oberen Fügepartner dar. Alternativ sind auch andere Methoden, wie zum Beispiel Stanzen oder Schweißen, zum Einbringen des Vorloches in den oberen Fügepartner denkbar. Desweitern kann auch ein Schneidverfahren, insbesondere ein Wasser- oder ein Laserschneidverfahren, zum Einbringen des Vorlochs eingesetzt werden. Insbesondere bei oberen Fügepartnern aus einem spröden Material kann dies vorteilhaft sein. Auch kann das Vorloch bereits bei der Herstellung oberen Fügepartners vorgesehen werden. Dies ist insbesondere bei einem oberen Fügepartner aus einem Faserverbundwerkstoff besonders vorteilhaft, da die Fasern um das Vorloch verlegt werden können und so eine besonders hohe Stabilität des Vorlochs erzeugt werden kann. Ferner kann bei einem erfindungsgemäßen Verfahren vorgesehen sein, dass vor dem Stanzen zumindest ein mittlerer Fügepartner zwischen dem oberen und dem unteren Fügepartner angelegt wird. Selbstverständlich können auch mehrere mittlere Fügepartner zwischen dem oberen und dem unteren Fügepartner angelegt werden. Beliebige Kombinationen an Fügepartnern sind somit möglich. Das im Schritt a) des erfindungsgemäßen Verfahrens eingebrachte Vorloch kann dabei sowohl nur im oberen Fügepartner als auch im oberen und in zumindest einem mittleren Fügepartner eingebracht werden. Ausschlaggebend ist dabei, dass das Vorloch von der Oberseite des oberen Fügepartners her vollständig durchgängig ist. Dadurch können auch bei dem zumindest einem mittleren Fügepartner beliebige Materialien verwendet werden. Dadurch ergibt sich eine breite Anwendungsmöglichkeit des erfindungsgemäßen Verfahrens für eine Vielzahl von Fügepartnern.

Auch kann bei einem erfindungsgemäßen Verfahren vorgesehen sein, dass die Fügepartner beim Anliegen miteinander verklebt werden. Ein Verrutschen der Fügepartner gegeneinander ist somit nicht oder nur schwer möglich. Dadurch ergibt sich ein noch besseres Anliegen der Fügepartner aneinander. Der Fügeprozess wird dadurch erleichtert. Ferner bewirkt ein Verkleben der Fügepartner einen zusätzlichen axialen Halt. Die Fügeverbindung wird dadurch noch sicherer. Insbesondere in Verbindung mit einem beschichteten Stanzniet kann darüber hinaus eine galvanische Trennung der Fügepartner erreicht und/oder Kriechströme zwischen den Fügepartnern verhindert oder zumindest unterdrückt werden.

Ferner kann in einer Weiterentwicklung eines erfindungsgemäßen Verfahrens vorgesehen sein, dass beim Verkleben der Fügepartner das Vorloch mit Klebstoff, insbesondere vollständig, verfüllt wird. Dabei kann insbesondere vorgesehen sein, dass das Vorloch derart mit Klebstoff verfüllt wird, dass es nach Einbringung des Stanzniets vollständig verfüllt ist. Dadurch kann eine besonders stabile Fixierung des Stanzniets erreicht werden.

Ferner kann bei einem erfindungsgemäßen Verfahren vorgesehen sein, dass ein Stanzniet gemäß dem ersten Aspekt der Erfindung verwendet wird. Sämtliche Vorteile, die zu einem Stanzniet gemäß dem ersten Aspekt der Erfindung beschrieben worden sind, ergeben sich somit selbstverständlich auch für ein erfindungsgemäßes Verfahren, bei dem ein derartiger Stanzniet verwendet wird.

### BEVORZUGTE AUSFÜHRUNGSBEISPIELE

Das erfindungsgemäße Verfahren und seine Weiterbildungen sowie deren Vorteile werden nachfolgend anhand von Zeichnungen näher erläutert. Es zeigen jeweils schematisch:
- Fig. 1: ein Fügeverfahren gemäß dem Stand der Technik,
- Fig. 2: ein Stanzniet der in einem erfindungsgemäßen Verfahren verwendet wird,
- Fig. 3: ein oberer und ein unterer Fügepartner nach Schritt b) des erfindungsgemäßen Verfahrens,
- Fig. 4: eine teilweise Durchführung eines erfindungsgemäßen Fügevorganges und
- Fig. 5: eine weitere, teilweise Durchführung eines erfindungsgemäßen Fügevorgangs.

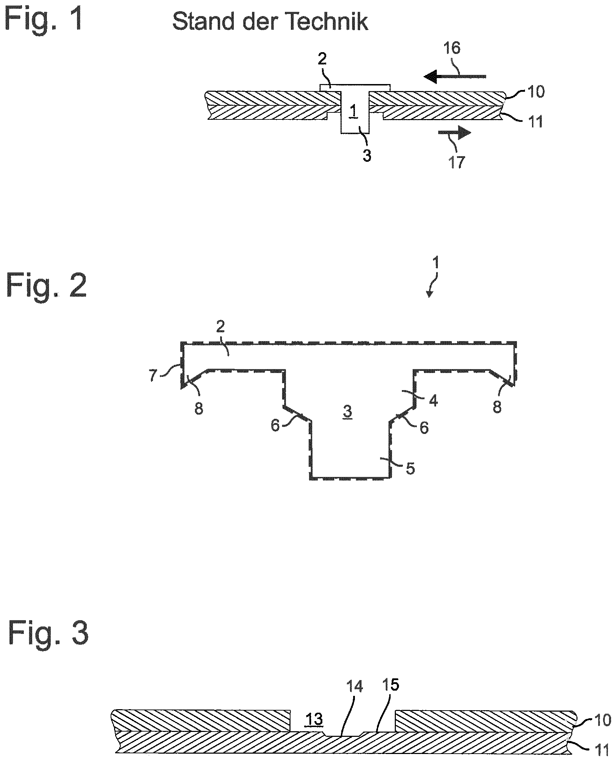

Elemente mit gleicher Funktion und Wirkungsweise sind in den Figuren 1 bis 5 jeweils mit denselben Bezugszeichen versehen.

Fig. 1 zeigt ein Fügeverfahren, wie es gemäß dem Stand der Technik bekannt ist. Ein oberer und ein unterer Fügepartner 10, 11 sind aneinander angelegt. Der Schaft 3 eines Stanzniets 1 ist durch beide Fügepartner 10, 11 gestanzt. Ein Kopf 2 des Stanzniets 1 liegt an der Oberfläche des oberen Fügepartners 10 an. Werden als Materialien für die beiden Fügepartner 10, 11 Werkstoffe verwendet, die unterschiedliche Wärmeausdehnungskoeffizienten, angedeutet durch Pfeile 16, 17, aufweisen, kann es bei einer dem Fügeprozess nachgelagerten Wärmeprozess zu Verbindungs- und/oder Materialbeschädigungen kommen. Diese Beschädigungen können beispielsweise bei Verwendung eines oberen Fügepartners 10 aus einem Faserverbundwerkstoff und eines unteren Fügepartners 11 aus einem metallischen Werkstoff auftreten. Im gezeigten Fall würde sich bei einem derartigen Wärmeprozess beispielsweise der obere Fügepartner 10 deutlich ausdehnen, wie es durch Pfeil 16 dargestellt ist, und der untere Fügepartner 11 zusammenziehen, Pfeil 17. Diese gegenläufige Bewegung wird jedoch durch den Stanzniet 1 der Fügeverbindung, insbesondere durch das formschlüssige Anliegen der Fügepartner 10, 11 am Stanzniet 1, verhindert. Dadurch kann es bei einem Wärmeprozess zu Spannungen kommen, die in Verbindungs- und/oder Materialbeschädigungen münden können. Derartige Spannungen können auch bereits dann auftreten, wenn die Wärmeausdehnungskoeffizienten nicht gegenläufig sondern nur unterschiedlich groß sind.

In Fig. 2 ist ein Längsschnitt eines Stanzniets 1 gezeigt, wie er in einem erfindungsgemäßen Verfahren verwendet werden kann. Der Stanzniet 1 ist dabei insbesondere ein rotationssymmetrischer Stanzniet 1. Selbstverständlich sind auch alternative Stanznietformen denkbar. Der Stanzniet 1 weist dabei einen Kopf 2 auf, wobei der Kopf 2 insbesondere derart dimensioniert ist, dass er das Vorloch 13 im oberen Fügepartner 10 (nicht abgebildet) abdecken, insbesondere vollständig abdecken, kann. Am Rand des Kopfes ist ein umlaufender Vorsprung 8 angeordnet. Dieser Vorsprung 8 kann sich bei einem Stanzvorgang in den oberen Fügepartner 10 um das Vorloch 13 herum einprägen. Das Vorloch 13 kann dadurch zusätzlich abgedichtet werden. Der Schaft 3 des Stanzniets 1 weist einen oberen Schaftabschnitt 4 und einen unteren Schaftabschnitt 5 auf. Der obere Schaftabschnitt 4 weist dabei einen größeren Querschnitt auf als der untere Schaftabschnitt 5. Im Bereich des Übergangs zwischen dem oberen Schaftabschnitt 4 und dem unteren Schaftabschnitt 5 weist der abgebildete Stanzniet 1 eine Abschrägung 6 auf. Durch die in abgebildeten Fall rotationssymmetrische Ausführung des Stanzniets 1 ist die Abschrägung 6 dabei eine konisch umlaufende Verjüngung. Durch die Abschrägung 6 können Fertigungstoleranzen in der Dicke des oberen Fügepartners 10 (nicht abgebildet) und der Höhe des oberen Schaftabschnitts 4 ausgeglichen werden. Alternativ ist im Bereich des Übergangs zwischen dem oberen Schaftabschnitt 4 und dem unteren Schaftabschnitt 5 auch eine rechtwinklige Abstufung denkbar. Auch speziell für die Verdrängung von Klebemittel optimierte Formen des Übergangs sind selbstverständlich möglich. Ferner weist der abgebildete Stanzniet 1 eine Beschichtung 7 auf, die als umlaufende gestrichelte Linie dargestellt ist. Diese Beschichtung 7 kann insbesondere elektrisch nicht leitend sein, wodurch eine galvanische Trennung des Stanzniets 1 von den zu fügenden Fügepartnern möglich ist. Abgebildet ist eine vollständig umlaufende Beschichtung 7 des Stanzniets 1. Selbstverständlich ist auch keine oder nur eine bereichsweise durchgeführte Beschichtung 7 des Stanzniets 1 denkbar.

In Fig. 3 sind ein oberer und ein unterer Fügepartner 10, 11 nach Durchführung des Schritts b) des erfindungsgemäßen Verfahrens gezeigt. Das Vorloch 13 ist bereits in den oberen Fügepartner 10 eingebracht und die beiden Fügepartner 10, 11 sind aneinander angelegt. Durch das Vorloch 13 ist die Oberfläche 15 des unteren Fügepartners 11, die dem oberen Fügepartner 10 zugewandt wird, von oben zugänglich. Ein Stanzniet 1 (nicht abgebildet) kann in das Vorloch 13 eingeführt werden, ohne den oberen Fügepartner 10 zu berühren. Zusätzlich ist in Fig. 3 eine mögliche Ausgestaltungsform eines Zentriermittels 14 dargestellt. Das Zentriermittel 14 ist hier eine Vertiefung im unteren Fügepartner 11. Das Zentriermittel 14 ist dabei insbesondere zentriert in Bezug auf das Bohrloch 13 im unteren Fügepartner 11 angebracht. Der Schaft 3 eines Stanzniets 1 (nicht abgebildet) kann in das Zentriermittel 14 eingreifen und wird somit innerhalb des Bohrlochs 13 fixiert. Ein Verrutschen des Stanzniets 1 innerhalb des Vorloches 13 kann somit durch ein Zentriermittel 14 sicher vermieden oder zumindest eingeschränkt werden.

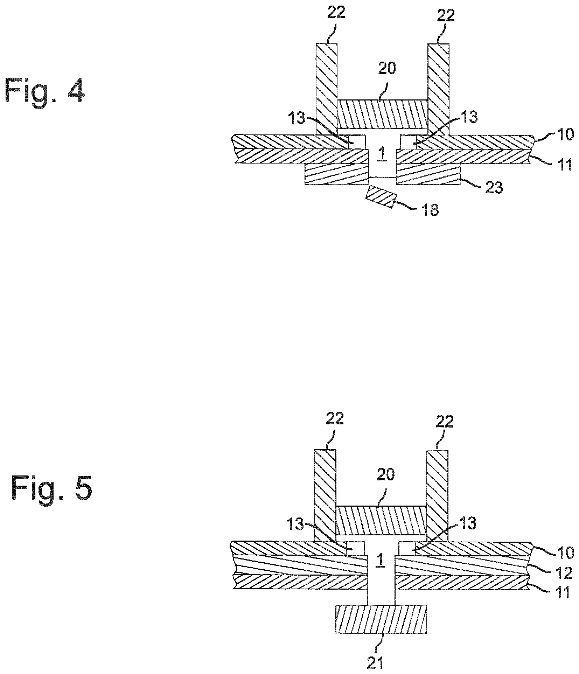

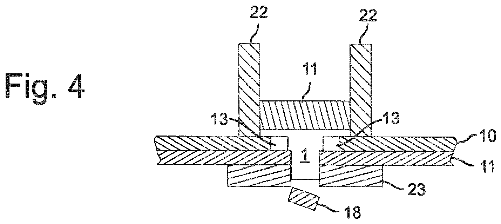

Fig. 4 zeigt eine teilweise Durchführung eines erfindungsgemäßen Fügevorgangs. Es ist Schritt d) des erfindungsgemäßen Verfahrens gezeigt. Ein oberer und ein unterer Fügepartner 10, 11 sind aneinander angelegt. Die beiden Fügepartner 10, 11 werden zusätzlich durch einen Niederhalter 22 und eine zweite Matrize 23 gegeneinander gepresst. Der Stanzniet 1, der insbesondere wie der Stanzniet in Fig. 2 ausgeführt sein kann, ist im Niederhalter 22 geführt. Die einzelnen Bestandteile des Stanzniets 1 sind in dieser Figur nicht näher bezeichnet sondern entsprechen denen des in Fig. 2 gezeigten Stanzniets 1. Ebenso im Niederhalter 22 ist ein erster Stempel 20 geführt, der den Stanzniet 1 durch den unteren Fügepartner 11 drückt. Die zweite Matrize 23 weist eine zentrale Bohrung auf, in der der Stanzrest 18 des unteren Fügepartners 11 eingeführt werden kann. Im gezeigten Schritt ist das Stanzen des Stanzniets 1 durch den unteren Fügepartner 11 bereits durchgeführt. Deutlich sichtbar ist, dass der Schaft 3 des Stanzniets 1, insbesondere der obere Schaftabschnitt 4, im Bereich des Vorlochs 13 den oberen Fügepartner 10 nicht berührt. Der Kopf 2 des Stanzniets 1 deckt das Vorloch 13 vollständig ab. Im Bereich des Übergangs des oberen zum unteren Schaftabschnitt 4, 5 des Stanzniets 1 schlägt der untere Fügepartner 11 am oberen Schaftabschnitt 4 an. Die Länge des oberen Schaftabschnitts 4 ist dafür auf die Dicke des oberen Fügepartners 10 derart abgestimmt, dass sie der Dicke des oberen Fügepartners 10 entspricht. Durch das Vorloch 13 ist es selbst bei Fügepartnern 10, 11 mit deutlich unterschiedlichen Wärmeausdehnungskoeffizienten möglich, Verbindungs- und/oder Materialbeschädigungen bei dem Fügeprozess nachgelagerten Wärmeprozessen zu verhindern. Auch kann, da ein Stanzen des Stanzniets 1 durch den oberen Fügepartner 10 aufgrund des Vorloches 13 nicht nötig ist, spröde Materialien für den oberen Fügepartner 10 verwendet werden.

In Fig. 5 wird ein weiterer zusätzlicher Schritt eines erfindungsgemäßen Verfahrens gezeigt. Hier abgebildet ist der Beginn des Verformens des Schaftes 3 des Stanzniets 1 durch eine erste Matrize 21. Die Matrize 21 ist im dargestellten Fall als zweiter Stempel 21 ausgebildet. Im Gegensatz zu Fig. 4 ist im abgebildeten Fall zusätzlich zwischen dem oberen Fügepartner 10 und dem unteren Fügepartner 11 ein mittlerer Fügepartner 12 angelegt. Das Vorloch 13 befindet sich nur im oberen Fügepartner 10. Der Stanzniet 1 ist bereits durch den ersten Stempel 20 durch den unteren Fügepartner 11 und den mittleren Fügepartner 12 gedrückt. An das Ende des Stanzniets 1 ist die erste Matrize beziehungsweise der zweiter Stempel 21 angeordnet, durch den der Schaft 3 des Stanzniets 1 und/oder der untere Fügepartner 11 zur Bildung eines Formschlusses verformt werden wird. Den Gegendruck zu dieser Verformung üben der erste Stempel 20 und der Niederhalter 22 aus. Insbesondere bei einem Stanzniet 1, der eine Beschichtung 7 aufweist und einem elektrische nicht leitenden mittleren Fügepartner 12 kann eine galvanische Trennung der beiden Fügepartner 10, 11 erreicht werden. Eine derartige galvanische Trennung kann alternativ oder zusätzlich auch durch ein Verkleben der Fügepartner 10, 11 erreicht werden. Bei dem vorgesehenen Verformen des Schaftes 3 des Stanzniet 1 kann ein zweiter Kopf des Stanzniets 1 ausgeformt werden. Ferner ist es möglich, dass der Stanzniet 1 Aufnahmen, insbesondere umlaufende nutartige Aufnahmen, aufweist (nicht abgebildet), in die durch die erste Matrize 21 beziehungsweise den zweiten Stempel 21 Material des unteren Fügepartners 11 eingepresst wird. In allen Ausgestaltungen wird ein Formschluss zwischen dem Stanzniet 1 und dem unteren Fügepartner 11 geschaffen, wodurch eine sichere Fügeverbindung zwischen den Fügepartnern 10, 12, 11 geschaffen wird. Wiederum ist deutlich sichtbar, dass durch das Vorloch 13 im oberen Fügepartner 10 ein Stanzen des Stanzniets 1 durch den oberen Fügepartner 10 nicht nötig ist. Dadurch ist wiederum ein Einsatz von spröden Materialien für den oberen Fügepartner 10 möglich. Auch ein Einsatz von Materialien mit unterschiedlichen Wärmeausdehnungskoeffizienten für die unterschiedlichen Fügepartner 10, 12, 11 ist möglich, da diese unterschiedlichen Wärmeausdehnungen ebenfalls durch das Vorloch 13 kompensiert werden können.

### Bezugszeichenliste

- 1: Stanzniet
- 2: Kopf
- 3: Schaft
- 4: oberer Schaftabschnitt
- 5: unterer Schaftabschnitt
- 6: Abschrägung
- 7: Beschichtung
- 8: Vorsprung

- 10: oberer Fügepartner
- 11: unterer Fügepartner
- 12: mittlerer Fügepartner
- 13: Vorloch
- 14: Zentriermittel
- 15: Oberfläche des unteren Fügepartners
- 16: Wärmeausdehnung des oberen Fügepartners
- 17: Wärmeausdehnung des unteren Fügepartners
- 18: Stanzrest des unteren Fügepartners

- 20: erster Stempel
- 21: erste Matrize/zweiter Stempel
- 22: Niederhalter
- 23: zweite Matrize

## Patentansprüche

1. System, aufweisend einen Stanzniet (1), einen oberen Fügepartner (10) und einen unteren Fügepartner (11), der Stanzniet (1) aufweisend einen Kopf (2) und einen Schaft (3), wobei der Stanzniet (1) einen oberen und einen unteren Schaftabschnitt (4, 5) mit unterschiedlichen Querschnitten aufweist, wobei der am Kopf (2) des Stanzniets (1) ausgebildete obere Schaftabschnitt (4) den größeren Querschnitt aufweist,
**dadurch gekennzeichnet, dass** die Länge des oberen Schaftabschnitts (4) des Stanzniets (1) der Dicke des oberen Fügepartners (10) entspricht, so dass, nach einem Stanzen des Schaftes (3) des Stanzniets (1) beim Fügen der Fügepartner (10, 11) nur der untere Schaftabschnitt (5) in oder durch den unteren Fügepartner (11) gestanzt ist und der Kopf (2) des Stanzniets (1) formschlüssig an der dem unteren Fügepartner (11) abgewandten Seite des oberen Fügepartners (10) anliegt.

2. System nach Anspruch 1, **dadurch gekennzeichnet, dass** der Querschnitt des oberen Schaftabschnitts (4) des Stanzniets (1) und der Querschnitt des unteren Schaftabschnitts (5) des Stanzniets (1) die gleiche geometrische Form aufweisen und/oder zentriert zueinander angeordnet sind.

3. System nach wenigstens einem der vorhergehenden Ansprüche, **dadurch gekennzeichnet, dass** nach einem Stanzen des Schaftes (3) des Stanzniets (1) beim Fügen der Fügepartner (10, 11) der obere Schaftabschnitt (4) des der Stanzniets (1) an der dem oberen Fügepartner (10) zugewandten Oberfläche (15) des unteren Fügepartners (11) formschlüssig anschlägt.

4. System nach Anspruch 3, **dadurch gekennzeichnet, dass** der obere Schaftabschnitt (4) des Stanzniets (1) umlaufend, insbesondere gleichmäßig umlaufend, am unteren Fügepartner (11) anschlägt.

5. System nach wenigstens einem der vorhergehenden Ansprüche, **dadurch gekennzeichnet, dass** der obere Schaftabschnitt (4) des Stanzniets (1) im Bereich des Übergangs zum unteren Schaftabschnitt (5) des Stanzniets (1) eine Abschrägung (6), insbesondere eine konisch umlaufende Verjüngung, aufweist.

6. System nach wenigstens einem der vorhergehenden Ansprüche, **dadurch gekennzeichnet,** der Stanzniet (1) ein Vollstanzniet oder ein Halbhohlstanzniet ist.

7. System nach wenigstens einem der vorhergehenden Ansprüche, **dadurch gekennzeichnet, dass** der Stanzniet (1) zumindest teilweise mit einer Beschichtung (7) versehen ist.

8. System nach wenigstens einem der vorhergehenden Ansprüche, **dadurch gekennzeichnet, dass** der Kopf (2) des Stanzniets (1) einen, insbesondere umlaufenden, Vorsprung (8) aufweist, der beim Stanzen in die dem unteren Fügepartner (11) abgewandten Seite des oberen Fügepartners (10) eingedrückt ist.

9. Verfahren zum Fügen von einem oberen Fügepartner (10) und einem unteren Fügepartner (11), wobei die Fügepartner (10, 11) des Systems gemäß zumindest einem der Ansprüche 1 bis 8 durch einen Stanzniet (1) des Systems gemäß zumindest einem der Ansprüche 1 bis 8, der Stanzniet (1) aufweisend einen Kopf (2) und einen Schaft (3), verbunden werden, **gekennzeichnet durch** folgende Schritte:
a) Einbringen eines Vorloches (13) in den oberen Fügepartner (10), wobei der Querschnitt des Vorloches (13) größer ist als der Querschnitt des Schaftes (3) des Stanzniets (1),
b) Anlegen der Fügepartner (10, 11) aneinander,
c) Einführen des Schaftes (3) des Stanzniets (1) in das Vorloch (13),
d) Stanzen des Schaftes (3) des Stanzniets (1) **durch** den unteren Fügepartner (11) **durch** einen ersten Stempel (20), wobei der Stanzniet (1) **durch** den unteren Fügepartner (11) gedrückt wird bis der Kopf (2) des Stanzniets (1) formschlüssig an der dem unteren Fügepartner (11) abgewandten Seite des oberen Fügepartners (10) anliegt, wobei der Kopf (2) des Stanzniets (1) das Vorloch (13) abdeckt.

10. Verfahren nach Anspruch 9, **dadurch gekennzeichnet, dass** Schritt b) vor Schritt a) ausgeführt wird.

11. Verfahren nach wenigstens einem der Ansprüche 9 oder 10, **dadurch gekennzeichnet, dass** nach Schritt d) ein Verformen des Schaftes (3) des Stanzniets (1) und/oder des unteren Fügepartners (11) durch eine erste Matrize (21) zur Ausbildung einer axialen Fixierung des Schaftes (3) des Stanzniets (1) im und/oder am unteren Fügepartner (11).

12. Verfahren nach wenigstens einem der vorhergehenden Ansprüche 9 bis 11, **dadurch gekennzeichnet, dass** Zentriermittel (14) vorgesehen sind, durch die der Stanzniets (1) in dem Vorloch (13) zentriert wird.

13. Verfahren nach wenigstens einem der vorhergehenden Ansprüche 9 bis 12, **dadurch gekennzeichnet, dass** während des Stanzens die Fügepartner (10, 11) durch einen Niederhalter (22) am oberen Fügepartner (10) und durch eine zweite Matrize (23) am unteren Fügepartner (11) gegeneinander gedrückt werden.

14. Verfahren nach wenigstens einem der vorhergehenden Ansprüche 9 bis 13, **dadurch gekennzeichnet, dass** in Schritt a) das Vorloch (13) durch eine spanende Bearbeitung, insbesondere durch Bohren oder Fräsen, durch ein Schneid-, Schweiß- oder Stanzverfahren oder bei der Herstellung des oberen Fügepartners (10) erzeugt wird.

15. Verfahren nach wenigstens einem der vorhergehenden Ansprüche 9 bis 14, **dadurch gekennzeichnet, dass** vor dem Stanzen zumindest ein mittlerer Fügepartner (12) zwischen den oberen (10) und den unteren Fügepartner (11) angelegt wird.

16. Verfahren nach wenigstens einem der vorhergehenden Ansprüche 9 bis 15, **dadurch gekennzeichnet, dass** die Fügepartner (10, 11) beim Anlegen aneinander miteinander verklebt werden.

17. Verfahren nach Anspruch 16, **dadurch gekennzeichnet, dass** beim Verkleben der Fügepartner (10, 11) das Vorloch (13) mit Klebstoff, insbesondere vollständig, verfüllt wird.

## Claims

1. A system, having a punch rivet (1), an upper joining component (10) and a lower joining component (11), the punch rivet (1) having a head (2) and a shank (3), wherein the punch rivet (1) has an upper and a lower shank portion (4, 5) with different cross-sections, wherein the upper shank portion (4) formed at the head (2) of the punch rivet (1) has the larger cross-section, **characterised in that** the length of the upper shank portion (4) of the punch rivet (1) corresponds to the thickness of the upper joining component (10), so that after punching of the shank (3) of the punch rivet (1) upon the joining of the joining components (10, 11) only the lower shank portion (5) is punched into or through the lower joining component (11) and the head (2) of the punch rivet (1) lies in positive manner against that side of the upper joining component (10) which faces away from the lower joining component (11).

2. A system according to Claim 1, **characterised in that** the cross-section of the upper shank portion (4) of the punch rivet (1) and the cross-section of the lower shank portion (5) of the punch rivet (1) have the same geometric form and/or are arranged centred relative to each other.

3. A system according to at least one of the preceding claims, **characterised in that** after punching of the shank (3) of the punch rivet (1) upon the joining of the joining components (10, 11) the upper shank portion (4) of the punch rivet (1) strikes that surface (15) of the lower joining component (11) which faces the upper joining component (10) in positive manner.

4. A system according to Claim 3, **characterised in that** the upper shank portion (4) of the punch rivet (1) strikes the lower joining component (11) all round, especially uniformly all round.

5. A system according to at least one of the preceding claims, **characterised in that** the upper shank portion (4) of the punch rivet (1) in the region of the transition to the lower shank portion (5) of the punch rivet (1) has a chamfer (6), especially a taper running conically all round.

6. A system according to at least one of the preceding claims, **characterised in** the punch rivet (1) is a solid punch rivet or a semi-tubular punch rivet.

7. A system according to at least one of the preceding claims, **characterised in that** the punch rivet (1) is provided at least partly with a coating (7).

8. A system according to at least one of the preceding claims, **characterised in that** the head (2) of the punch rivet (1) has an, especially all-round, projection (8) which upon the punching is pressed into that side of the upper joining component (10) which faces away from the lower joining component (11).

9. A method for joining an upper joining component (10) and a lower joining component (11), wherein the joining components (10, 11) of the system according to at least one of Claims 1 to 8 are connected by a punch rivet (1) of the system according to at least one of Claims 1 to 8, the punch rivet (1) having a head (2) and a shank (3), **characterised by** the following steps:
a) introducing a pre-punched hole (13) into the upper joining component (10), the cross-section of the pre-punched hole (13) being greater than the cross-section of the shank (3) of the punch rivet (1),
b) laying the joining components (10, 11) against one another,
c) introducing the shank (3) of the punch rivet (1) into the pre-punched hole (13),
d) punching the shank (3) of the punch rivet (1) through the lower joining component (11) by a first male die (20), wherein the punch rivet (1) is pressed through the lower joining component (11) until the head (2) of the punch rivet (1) lies in positive manner on that side of the upper joining component (10) which faces away from the lower joining component (11), the head (2) of the punch rivet (1) covering the pre-punched hole (13).

10. A method according to Claim 9, **characterised in that** step b) is performed prior to step a).

11. A method according to at least one of Claims 9 or 10, **characterised in that** after step d) deformation of the shank (3) of the punch rivet (1) and/or of the lower joining component (11) by a first female die (21) to form an axial fixing of the shank (3) of the punch rivet (1) in and/or on the lower joining component (11).

12. A method according to at least one of the preceding Claims 9 to 11, **characterised in that** centring means (14) are provided by which the punch rivet (1) is centred in the pre-punched hole (13).

13. A method according to at least one of the preceding Claims 9 to 12, **characterised in that** during the punching the joining components (10, 11) are pressed against each other by a hold-down device (22) on the upper joining component (10) and by a second female die (23) on the lower joining component (11).

14. A method according to at least one of the preceding Claims 9 to 13, **characterised in that** in step a) the pre-punched hole (13) is produced by machining, especially by drilling or milling, by a cutting, welding or punching process or in the production of the upper joining component (10).

15. A method according to at least one of the preceding Claims 9 to 14, **characterised in that** prior to the punching at least one middle joining component (12) is laid between the upper (10) and the lower joining component (11).

16. A method according to at least one of the preceding Claims 9 to 15, **characterised in that** the joining components (10, 11) are glued together when they are laid against one another.

17. A method according to Claim 16, **characterised in that** upon the gluing of the joining components (10, 11) the pre-punched hole (13) is filled with adhesive, especially completely.

## Revendications

1. Système comprenant un rivet auto-poinçonneur (1), un partenaire de jointure supérieur (10) et un partenaire de jointure inférieur (11), le rivet auto-poinçonneur (1) comprenant une tête (2) et un arbre (3), comportant un segment d'arbre supérieur et un segment d'arbre inférieur (4, 5) ayant des sections différentes, le segment d'arbre supérieur (4) situé sur la tête (2) du rivet auto-poinçonneur (1) ayant la plus grande section, **caractérisé en ce que**
la longueur du segment d'arbre supérieur (4) du rivet auto-poinçonneur (1) correspond à l'épaisseur du partenaire de jointure supérieur (10) de sorte que, après un poinçonnage de l'arbre (3) du rivet auto-poinçonneur (1) lors de la jointure des partenaires de jointure (10, 11) seul le segment d'arbre inférieur (5) soit poinçonné dans ou au travers du partenaire de jointure inférieur (11) et que la tête (2) du rivet auto-poinçonneur (1) s'applique par une liaison par la forme sur la face du partenaire de jointure supérieur (10) située à l'opposé du partenaire de jointure inférieur (11).

2. Système conforme à la revendication 1,
**caractérisé en ce que**
la section du segment d'arbre supérieur (4) du rivet auto-poinçonneur (1) et la section du segment d'arbre inférieur (5) du rivet auto-poinçonneur (1) ont la même forme géométrique et/ou sont centrées l'une par rapport à l'autre.

3. Système conforme à au moins l'une des revendications précédentes,
**caractérisé en ce que**
après un poinçonnage de l'arbre (3) du rivet auto-poinçonneur (1), lors de la jointure des partenaires de jointure (10, 11), le segment d'arbre supérieur (4) du rivet auto-poinçonneur (1) vient en butée par une liaison par le forme sur la surface (15) tournée vers le partenaire de jointure supérieur (10) du partenaire de jointure inférieur (11).

4. Système conforme à la revendication 3,
**caractérisé en ce que**
le segment d'arbre supérieur (4) du rivet auto-poinçonneur (1) vient circonférentiellement en butée, en particulier de façon uniforme sur le partenaire de jointure inférieur (11).

5. Système conforme à au moins l'une des revendications précédentes,
**caractérisé en ce que**
le segment d'arbre supérieur (4) du rivet auto-poinçonneur (1) comporte dans la zone de transition avec le segment d'arbre inférieur (5) de ce rivet auto-poinçonneur (1) un biseau (6), en particulier un amincissement s'étendant coniquement.

6. Système conforme à au moins l'une des revendications précédentes,
**caractérisé en ce que**
le rivet auto-poinçonneur (1) est un rivet auto-poinçonneur plein ou un rivet auto-poinçonneur semi-creux.

7. Système conforme à au moins l'une des revendications précédentes,
**caractérisé en ce que**
le rivet auto-poinçonneur (1) est équipé au moins en partie d'un revêtement (7).

8. Système conforme à au moins l'une des revendications précédentes,
**caractérisé en ce que**
la tête (2) du rivet auto-poinçonneur (1) comporte une saillie (8) en particulier périphérique qui, lors du poinçonnage est insérée à force dans la face du partenaire de jointure supérieur (10) située à l'opposé du partenaire de jointure inférieur (11).

9. Procédé de jointure d'un partenaire de jointure supérieur (10) et d'un partenaire de jointure inférieur (11), selon lequel les partenaires de jointure (10, 11) du système conforme à au moins l'une des revendications 1 à 8, sont reliés par un rivet auto-poinçonneur (1) du système conforme à au moins l'une des revendications 1 à 8, ce rivet auto-poinçonneur (1) comportant une tête (2) et un arbre (3),
**caractérisé en ce qu'**
il comporte les étapes suivantes consistant à :
a) effectuer perçage préalable (13) dans le partenaire de jointure supérieur (10), la section de ce perçage préalable (13) étant supérieure à la section de l'arbre (3) du rivet auto-poinçonneur (1),
b) appliquer les partenaires de jointure (10, 11) l'un sur l'autre,
c) introduire l'arbre (3) du rivet auto-poinçonneur (1) dans le perçage préalable (13),
d) poinçonner l'arbre (3) du rivet auto-poinçonneur (1) au travers du partenaire de jointure inférieure (11) par l'intermédiaire d'un premier poinçon (20), le rivet auto-poinçonneur (1) étant introduit à force au travers du partenaire de jointure inférieur (11) jusqu'à ce que la tête (2) de ce rivet auto-poinçonneur (1) s'applique par une liaison par la forme sur la face opposée au partenaire de jointure inférieur (11) du partenaire de jointure supérieur (10), la tête (2) du rivet auto-poinçonneur (1) recouvrant le perçage préalable(13).

10. Procédé conforme à la revendication 9,
**caractérisé en ce que**
l'étape b) est mise en oeuvre avant l'étape a).

11. Procédé conforme à au moins l'une des revendications 9 et 10,
**caractérisé en ce qu'**
après l'étape d), une déformation de l'arbre (3) du rivet auto-poinçonneur (1) et/ou du partenaire de jointure inférieur (11) par une première matrice (21) et effectuée pour former une fixation axiale de l'arbre (3) du rivet auto-poinçonneur (1) dans et/ou sur le partenaire de jointure inférieur (11).

12. Procédé conforme à au moins l'une des revendications précédentes 9 à 11,
**caractérisé en ce qu'**
il est prévu des moyens de centrage (14) permettant de centrer le rivet auto-poinçonneur (1) dans le perçage préalable (13).

13. Procédé conforme à au moins l'une des revendications précédentes 9 à 12,
**caractérisé en ce que**
pendant le poinçonnage, les partenaires de jointure (10, 11) sont appliqués à force l'un contre l'autre par un serre flanc (22) sur le partenaire de jointure supérieur (10) et par une seconde matrice (23) sur le partenaire de jointure inférieur (11).

14. Procédé conforme à au moins l'une des revendications précédentes 9 à 13,
**caractérisé en ce que**
lors de l'étape a) le perçage préalable (13) est obtenu par un usinage par enlèvement de copeaux en particulier par un perçage ou un fraisage, par un procédé de découpe, de soudure ou de poinçonnage ou lors de l'obtention du partenaire de jointure supérieur (10).

15. Procédé conforme à au moins l'une des revendications précédentes 9 à 14,
**caractérisé en ce qu'**
avant le poinçonnage, au moins un partenaire de jointure (12) médian est introduit entre le partenaire de jointure supérieur (10) et le partenaire de jointure inférieur (11).

16. Procédé conforme à au moins l'une des revendications précédentes 9 à 15,
**caractérisé en ce que**
lors de leur application l'un sur l'autre les partenaires de jointure (10, 11) sont collés l'un à l'autre.

17. Procédé conforme à la revendication 16,
**caractérisé en ce que**
lors du collage des partenaires de jointure (10, 11) le perçage préalable (13) est rempli en particulier en totalité d'une colle.
